# EUROPÄISCHE PATENTSCHRIFT

(11) **EP 2 597 279 B1**
(45) Veröffentlichungstag und Bekanntmachung des Hinweises auf die Patenterteilung: **04.08.2021**
(21) Anmeldenummer: 11009222.8
(22) Anmeldetag: 22.11.2011
(51) Int. Cl.: F01N 3/20, F01N 3/035, F01N 13/02

(54) **Vorrichtung und Verfahren zur Reinigung von Dieselmotorenabgasen**
Method and device for cleaning diesel engine exhaust gases
Dispositif et procédé de nettoyage de gaz d'échappement de moteurs diesel

(43) Veröffentlichungstag der Anmeldung: 29.05.2013
(73) Patentinhaber: DEUTZ Aktiengesellschaft, 51149 Köln (DE)
(72) Erfinder: Schraml, Stephan, Dr., 53639 Königswinter (DE); Roos, Meike, Dr., 63654 Büdingen (DE); Müller, Markus, Dr., 51467 Bergisch-Gladbach (DE)

(56) Entgegenhaltungen:
- WO-A1-2007/145548
- WO-A1-2009/017597
- WO-A2-03/054364
- DE-A1-102008 019 814
- DE-T5-112009 000 229
- US-A1- 2009 193 794

## Beschreibung

Die Erfindung betrifft eine Vorrichtung und ein Verfahren zur Verminderung von Kohlenmonoxid, Kohlenwasserstoffen, Stickoxiden und Rußpartikeln im Abgas von Dieselmotoren, im speziellen eine Vorrichtung und ein entsprechendes Verfahren unter Einsatz eines katalytisch aktivierten Partikelfilters, das ein katalytisch aktives Material umfasst, das die selektive katalytische Reduktion von Stickoxiden zu Stickstoff fördert.

Das Abgas von Dieselmotoren enthält neben Kohlenmonoxid (CO), Kohlenwasserstoffen (HC), Stickoxiden (NOₓ) und Rußpartikeln (P.M.) bis zu 10 Vol.-% Sauerstoff. Zur Verminderung von Kohlenmonoxid und Kohlenwasserstoffen eignen sich herkömmliche Dieseloxidationskatalysatoren, die die Umsetzung von Kohlenmonoxid und Kohlenwasserstoffen mit dem im Abgas enthaltenen Sauerstoff zu unschädlichem Kohlendioxid (CO₂) wirksam fördern. Die Verminderung der im Abgas enthaltenen Stickoxide durch Reduktion derselben zu Stickstoff gestaltet sich schwieriger, da dies die Anwesenheit eines geeigneten Reduktionsmittels in ausreichender Menge erfordert. Zur Lösung dieser Aufgabe sind aus dem Stand der Technik diverse Methoden bekannt, beispielsweise der Einsatz sogenannter HC-DeNOx-Katalysatoren, die die Umsetzung der im Abgas enthaltenen Stickoxide mit den ebenfalls im Abgas enthaltenen Kohlenwasserstoffen zu Stickstoff befördern, oder der Einsatz sogenannter Stickoxidspeicherkatalysatoren. Das gegenwärtig am häufigsten angewandte Verfahren zur Verminderung von Stickoxiden in Dieselmotorenabgasen ist die sogenannte selektive katalytische Reduktion (Selective Catalytic Reduction SCR). Bei diesem Verfahren wird dem zu reinigenden Abgas Ammoniak und/oder eine zu Ammoniak zersetzliche Verbindung wie beispielsweise Hamstoff oder Ammoniumcarbamat als Reduktionsmittel aus einer motorunabhängigen Quelle zugegeben. An einem dafür geeigneten Katalysator, dem sogenannten SCR-Katalysator, werden die im Abgas enthaltenen Stickoxide mit Ammoniak in einer Komproportionierungsreaktion zu unschädlichem Stickstoff umgesetzt.

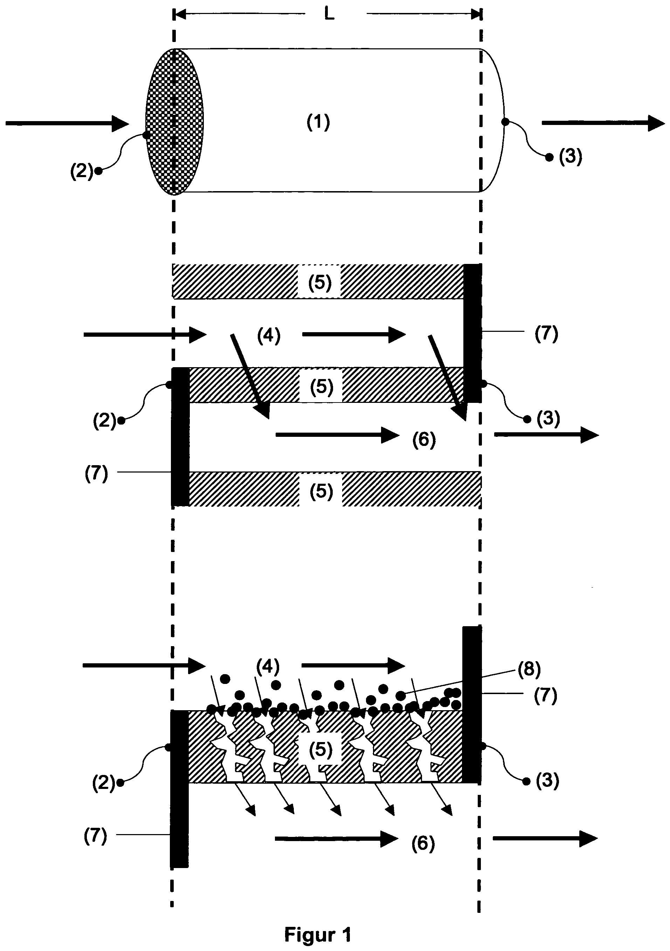

Rußpartikel entstehen im innermotorischen Verbrennungsprozeß unter Bedingungen, bei denen die Verbrennung des Dieselkraftstoffes unvollständig abläuft. Sie bestehen typischerweise aus Ruß, dem längerkettige Kohlenwasserstoffe anhaften können (Soluble Organic Fraction SOF). Je nach eingesetztem Dieselkraftstoff kann dem Ruß außerdem eine sogenannte anorganisch-lösliche Fraktion anhaften, beispielsweise aus Wasserdampf und Schefeloxiden, die aus der Verbrennung schwefelhaltiger Dieselkraftstoffbestandteile Im Brennraum des Zylinders entstehen, gebildete Schwefelsäureantelle. Zur Entfernung von Rußpartikeln aus dem Abgas von Dieselmotoren werden typischerweise Dieselpartikelfilter eingesetzt. Dabei handelt es sich bevorzugt um sogenannte "geschlossene" Filter, die ein Wandflußfiltersubstrat enthalten, durch das das zu reinigende Abgas hindurchgeleitet wird, siehe Figur 1. Solche Wandflußfiltersubstrate (1) weisen Anströmkanäle (4) auf, durch die das zu reinigende, rußpartikelhaltige Abgas in das Filter hineinströmt und die an der Auslaßseite (3) des Filters gasdicht verschlossen (7) sind. Durch eine poröse Wand (5) gelangt das Abgas in die sogenannten Abströmkanäle (6). Die Abströmkanäle sind an der Einlaßseite (2) gasdicht verschlossen (7). Die poröse Wand zwischen Einlaß- und Auslaßkanälen ist so gestaltet, daß nur die gasförmigen Anteile des Abgases durch die Poren in der Wand hindurchgelangen, während die Rußpartikel (8) In den Anströmkanälen des Filters zurückgehalten werden. Um ein Verblocken des Filters zu verhindern, werden die im Filter zurückgehaltenen Rußpartikel bei geeigneten Abgastemperaturen mit oxidierenden Bestandteilen des Abgases (Stickstoffdioxid und/oder Sauerstoff) mindestens anteilig zu gasförmigem Kohlenmonoxid und/oder Kohlendioxid umgesetzt.

Die Einhaltung der aktuellen und zukünftigen Emissionsgesetzgebung erfordert die deutliche Verminderung aller im Dieselmotorenabgas enthaltenen Schadgase (CO, HC, NOₓ), sowie eine deutliche Verminderung der im Abgas enthaltenen Rußpartikel. Verfahren zur Abgasreinigung, die Lösungen dieser Aufgabe vorstellen, sind im Stand der Technik bereits bekannt.

So offenbart EP-B-1 054 722 ein System zur selektiven katalytischen Reduktion (SCR) zur Behandlung von NOₓ und Feststoffteilchen enthaltendem Verbrennungsabgas, umfassend In Kombination und in dieser Reihenfolge, einen Oxydationskatalysator, der wirksam Ist, um wenigstens einen Teil NO des NOₓ in NO₂ umzuwandeln und den NO₂-Gehalt im Abgas zu erhöhen; ein Feinstofffilter; ein Reservoir für eine Reduktionsflüssigkeit; Einspritzvorrichtungen für eine solche Reduktionsflüssigkeit, die hinter dem Feinstofffilter angeordnet sind und einem SCR-Katalysator EP-B-2 123 345 offenbart eine entsprechende Anordnung der Abgasreinigungsaggregate Dieseloxidationskatalysator, Dieselpartikelfilter und SCR-Katalysator, wobei jedoch ein katalytisch aktiviertes Dieselpartikelfilter eingesetzt wird, und wobei eine bestimmte Verteilung der oxidativ wirksamen Edelmetallkomponenten Platin und Palladium über Dieseloxidationskatalysator und Dieselpartikelfilter offenbart wird, die eine Wirkungsgradverbesserung des in EP-B-1 054 722 beschriebenen Gesamtsystems zu Folge haben soll. Beide Systeme sind grundsätzlich geeignet, um Kohlenmonoxid, Kohlenwasserstoffe, Stickoxide und Rußpartikel im Abgas von Dieselmotoren wirksam zu vermindern. Allerdings haben beide Systeme den Nachteil, daß zur Erreichung der mit Blick auf die aufkommenden Emissionsgesetzgebungen notwendigen Reinigungseffizienz insbesondere bei Dieselgroßmotoren sehr große Abgasreinigungsreinigungsaggregate eingesetzt werden müssen, für die sehr viel Bauraum vorzusehen ist. Dies gilt insbesondere mit Blick auf die Erreichung der erforderlichen Reinigungseffizienz für Stickoxide, die am abströmseitig angeordneten SCR-Katalysator umgesetzt weden müssen.

DE112009000229T5 und WO2007/145548A1 offenbaren Vorrichtungen zur Verminderung von Kohlenmonoxid, Kohlenwasserstoffen, Stickoxiden und Rußpartikeln in Dieselmotorenabgasen.

Insbesondere im Bau- und Landmaschinenbereich ist Bauraum für Abgasreinigungsaggregate jedoch sehr knapp bemessen.

Es war daher Aufgabe der vorliegenden Erfindung, eine Vorrichtung und ein Verfahren zur Reinigung von Dieselmotorenabgasen bereitzustellen, das gegenüber den im Stand der Technik beschriebenen Verfahren eine erheblich verbesserte Reinigungseffizienz, Insbesondere hinsichtlich der Verminderung von Stickoxiden, aufweist und somit signifikante Bauraumeinsparungen ermöglicht.

Diese Aufgabe wird gelöst durch eine Vorrichtung zur Verminderung von Kohlenmonoxid, Kohlenwasserstoffen, Stickoxiden und Rußpartikeln in Dieselmotorenabgasen gemäß Anspruch 1, umfassend eine Abgasleitung (10) und als Bestandteil derselben in Kombination und in Strömungsrichtung des Abgases In dieser Reihenfolge:
1. einen Dieseloxidationskatalysator (20) zur Oxidation von Kohlenmonoxid, Kohlenwasserstoffen und Stickstoffmonoxid;
2. eine erste Vorrichtung (30) zur Zugabe von Ammoniak und/oder einer zu Ammoniak zersetzlichen Verbindung in das zu reinigende Abgas;
3. ein katalytisch aktiviertes Partikelfilter (40) enthaltend ein Wandflußfiltersubstrat, das ein katalytisch aktives Material umfasst, welches die selektive katalytische Reduktion von Stickoxiden zu Stickstoff fördert;
4. eine zweite Vorrichtung (30') zur Zugabe von Ammoniak und/oder einer zu Ammoniak zersetzlichen Verbindung in das zu reinigende Abgas; sowie
5. einen Katalysator zur selektiven katalytischen Reduktion von Stickoxiden zu Stickstoff (SCR-Katalysator, (50)), dadurch gekennzeichnet, daß ein erster Sensor zur Bestimmung des Stickoxidgehaltes im zu reinigenden Abgas in Strömungsrichtung des Abgases vor oder hinter dem Dieseloxidationskatalysator (20) angeordnet ist, während ein zweiter Sensor zur Bestimmung des Stickoxidgehaltes im zu reinigenden Abgas zwischen dem katalytisch aktivierten Partikelfilter (40) und der zweiten Vorrichtung zur Zugabe von Ammoniak (30') und/oder einer zu Ammoniak zersetzlichen Verbindung in das zu reinigende Abgas angeordnet ist.

Diese Aufgabe wird weiterhin gelöst durch ein Verfahren gemäß Ansprüch 9 zur Verminderung von Kohlenmonoxid, Kohlenwasserstoffen, Stickoxiden und Rußpartikeln in Dieselmotorenabgasen, umfassend:
1. Durchleiten des zu reinigenden Dieselmotorenabgases durch einen Dieseloxidationskatalysator, wobei Kohlenmonoxid und Kohlenwasserstoffe wenigstens anteilig zu Kohlendioxid oxidiert werden und Stickstoffmonoxid wenigstens anteilig zu Stickstoffdioxid oxidiert wird;
2. eine erste Zugabe von Ammoniak und/oder einer zu Ammoniak zersetzlichen Verbindung zum zu reinigenden Abgas abströmseitig zum Dieseloxidationskatalysator;
3. Durchleiten des zu reinigenden Abgases nach der ersten Zugabe von Ammoniak und/oder einer zu Ammoniak zersetzlichen Verbindung durch ein katalytisch aktiviertes Partikelfilter, wobei die Rußpartikel im Partikelfilter abgeschieden und wenigstens anteilig mit dem im Abgas enthaltenen Stickstoffdioxid zu Kohlenmonoxid und/oder Kohlendioxid oxidiert werden und wobei die im zu reinigenden Abgas enthaltenen und/oder bei der Rußoxidation als Nebenprodukt entstehenden Stickoxide wenigstens anteilig mit Ammoniak zu Stickstoff reduziert werden;
4. eine zweite Zugabe von Ammoniak und/oder einer zu Ammoniak zersetzlichen Verbindung zum zu reinigenden Abgas abströmseitig zum Partikelfilter; sowie
5. Durchleiten des zu reinigenden Abgases nach der zweiten Zugabe von Ammoniak und/oder einer zu Ammoniak zersetzlichen Verbindung durch einen Katalysator zur selektiven katalytischen Reduktion von Stickoxiden (SCR-Katalysator), wobei Stickstoffmonoxid und Stickstoffdioxid wenigstens anteilig mit Ammoniak zu Stickstoff reduziert werden, dadurch gekennzeichnet, daß ein erster Sensor zur Bestimmung des Stickoxidgehaltes im zu reinigenden Abgas in Strömungsrichtung des Abgases vor oder hinter dem Dieseloxidationskatalysator (20) angeordnet ist, während ein zweiter Sensor zur Bestimmung des Stickoxidgehaltes im zu reinigenden Abgas zwischen dem katalytisch aktivierten Partikelfilter (40) und der zweiten Vorrichtung zur Zugabe von Ammoniak (30') und/oder einer zu Ammoniak zersetzlichen Verbindung in das zu reinigende Abgas angeordnet ist.

Durch den Einsatz eines katalytisch aktivierten Partikelfilters, das ein katalytisch aktives Material umfasst, welches die selektive katalytische Reduktion von Stickoxiden zu Stickstoff fördert, in Kombination mit zwei Vorrichtungen zur Zugabe von Ammoniak und/oder einer zu Ammoniak zersetzlichen Verbindung als Raduktionsmittel, von denen eine anströmseitig zum katalytisch aktivierten Partikelfilter angebracht ist, während die zweite derartige Vorrichtung abströmseitig zum Partikelfilter und anströmseitig zum nachgeordneten SCR-Katalysator angebracht Ist, Ist es möglich, die Reinigungseffizienz des Systems bezüglich Stickoxiden derart zu verbessern, daß eine deutliche Volumenreduktion des nachgelagerten SCR-Katalysators und somit eine erhebliche Bauraumeinsparung ermöglicht wird. Ein weiterer Vorteil des erfindungsgemäßen Systems liegt darin, daß durch eine geeignete Auswahl des SCR-katalytisch aktiven Materials im katalytisch aktivierten Partikelfilter einerseits und im nachgeordneten SCR-Katalysator andererseits eine verbesserte Abstimmung der Hoch- und Tieftemperatureffizienz der SCR-katalytisch aktiven Relnigungsaggregate auf das tatsächliche Abgastemperaturniveau und ein verbesserter Schutz vor Vergiftungen derselben beispielsweise durch Schwefeloxide und/oder Kohlenwasserstoffe gewährieistet werden kann.

Desweiteren weist das erfindungsgemäße System im Vergleich zu Systemen nach dem Stand der Technik erheblich höhere Stickoxidkonvertierungsraten zu Stickstoff auf. Diese hohen NOₓ-Konvertierungsraten ermöglichen die Einhaltung aktueller und künftiger Emissionsgrenzwerte, ohne Vorrichtungen zur Abgasrückführung vorsehen zu müssen. Dies ist gleichbedeutend mit einer erheblichen Einsparung von Materialkosten einerseits und Entwicklungs- und Applikationsaufwand andererseits.

Verschiedene Ausführungsformen der erfindungsgemäßen Vorrichtung und des erfindungsgemäßen Verfahrens werden nachstehend detailliert beschrieben.

Das zu reinigende Dieselmotorenabgas wird gemäß der vorliegenden Erfindung zunächst durch einen Dieseloxidationskatalysator geleitet, wobei Kohlenmonoxid und Kohlenwasserstoffe anteilig zu Kohlendioxid oxidiert werden. Außerdem wird Im Abgas enthaltenes Stickstoffmonoxid wenigstens anteilig zu Stickstoffdioxid oxidiert. Als Dieseloxidationskatalysator eignen sich herkömmliche, im Stand der Technik bekannte Katalysatoren, die typischerweise eines oder mehrere Edelmetalle ausgewählt aus der Gruppe bestehend aus Platin, Palladium, Rhodium und Mischungen davon enthalten. Desweiteren können im Dieseloxidationskatalysator neben üblichen Beschichtungskomponenten wie Aluminiumoxid, Siliziumdioxid, Ceroxid, Zirkonoxid und/oder Mischungen davon auch Alumosilikate und/oder Zeolithe und/oder zeolithähnliche Verbindungen enthalten sein, die die Eigenschaft besitzen, bei Abgastemperaturen unterhalb von 250°C Kohlenwasserstoffe einzuspeichern und diese bei höheren Abgastemperaturen wieder zu desorbieren und mit Im Abgas enthaltenen Sauerstoff und/oder Stickstoffdioxid wenigstens anteilig zu Kohlendioxid umzusetzen.

Nach einer ersten Zugabe von Ammoniak und/oder einer zu Ammoniak zersetzlichen Verbindung zum zu reinigenden Abgas, dem Durchleiten desselben durch das katalytisch aktivierte Partikelfilter sowie einer zweiten Zugabe von Ammoniak und/oder einer zu Ammoniak zersetzlichen Verbindung wird das zu reinigende Abgas durch einen Katalysator zur selektiven katalytischen Reduktion von Stickoxiden (SCR-Katalysator) geleitet, wobei Stickstoffmonoxid und Stickstoffdioxid wenigstens anteilig mit Ammoniak in einer Komproportionierungsreaktion zu Stickstoff umgesetzt werden. Als SCR-Katalysator eignen sich ebenfalls herkömmliche, aus dem Stand der Technik gut bekannte Katalysatoren, die eine oder mehrere der folgenden Aktivkomponenten enthalten können:
∘ Übergangsmetalloxide ausgewählt aus der Gruppe bestehend aus Vanadiumoxid, Wolframoxid, Titanoxid, Ceroxld, Zirkonoxid, Lanthanoxid, Praseodymoxid, Neodymoxid, Nioboxid, Molybdänoxid, Eisenoxid und/oder Mischungen und Mischoxide davon;
∘ mit einem oder mehreren Übergangsmetallen ausgetauschte Zeolithe und/oder zeolithähnliche Verbindungen, wobei die Übergangsmetalle ausgewählt sind aus der Gruppe bestehend aus Eisen, Kupfer, Platin, Iridium, Silber, Cer und/oder Mischungen davon; und wobei die Zeolithe und/oder die zeolithähnlichen Verbindungen ausgewählt sind aus der Gruppe bestehend aus ZSM-5, ZSM-20, USY, β-Zeolith, FER, MOR, CHA, SAPO, ALPO und/oder Mischungen davon.

Die erfindungsgemäße Vorrichtung enthält weiterhin zwei Vorrichtungen zur Zugabe von Ammoniak und/oder einer zu Ammoniak zersetzlichen Verbindung in das zu reinigende Abgas, von denen eine erste zwischen dem Dieseloxidationskatalysator und dem katalytisch aktivierten Partikelfilter, und eine zweite zwischen dem katalytisch aktivierten Partikelfilter und dem SCR-Katalysator angeordnet ist. Beide Vorrichtungen ermöglichen die Zudosierung von Ammoniak und/oder einer zu Ammoniak zersetzlichen Verbindung als Reduktionsmittel für Stickoxide aus einer vom Motor unabhängigen Quelle. Entsprechende apparative Vorrichtungen als solche sind aus dem Stand der Technik ebenfalls aus dem Aufbau herkömmlicher SCR-Systeme bekannt und können in der erfindungsgemäßen Vorrichtung zur Durchführung des erfindungsgemäßen Verfahrens verwendet werden.

Das In der erfindungsgemäßen Vorrichtung und dem erfindungsgemäßen Verfahren verwendete katalytisch aktivierte Partikelfilter enthält ein Wandflußfiltersubstrat umfassend ein katalytisch aktives Material, welches die selektive katalytische Reduktion von Stickoxiden zu Stickstoff fördert. Wie In Figur 1 schematisch dargestellt und vorstehend bereits ausführlich erläutert, weist ein Wandflußfiltersubstrat Anström- und Abströmkanäle auf, die wechselseitig gasdicht verschlossen und durch eine poröse, für das zu reinigende Abgas durchlässige Wand voneinander getrennt sind.

Im Rahmen der vorliegenden Erfindung kann das Wandflußsubstrat selbst bereits aus einem katalytisch aktiven Material, das die selektive katalytische Reduktion von Stickoxiden zu Stickstoff fördert, gefertigt sein. Beispielsweise können entsprechende Substrate aus Übergangsmetalloxiden ausgewählt aus der Gruppe bestehend aus Vanadiumoxid, Wolframoxid, Titanoxid, Ceroxid, Zirkonoxid, Lanthanoxid, Praseodymoxid, Neodymoxid, Nioboxid, Molybdänoxid, Eisenoxid und/oder Mischungen und Mischoxiden davon in vollextrudierter Form gefertigt sein.

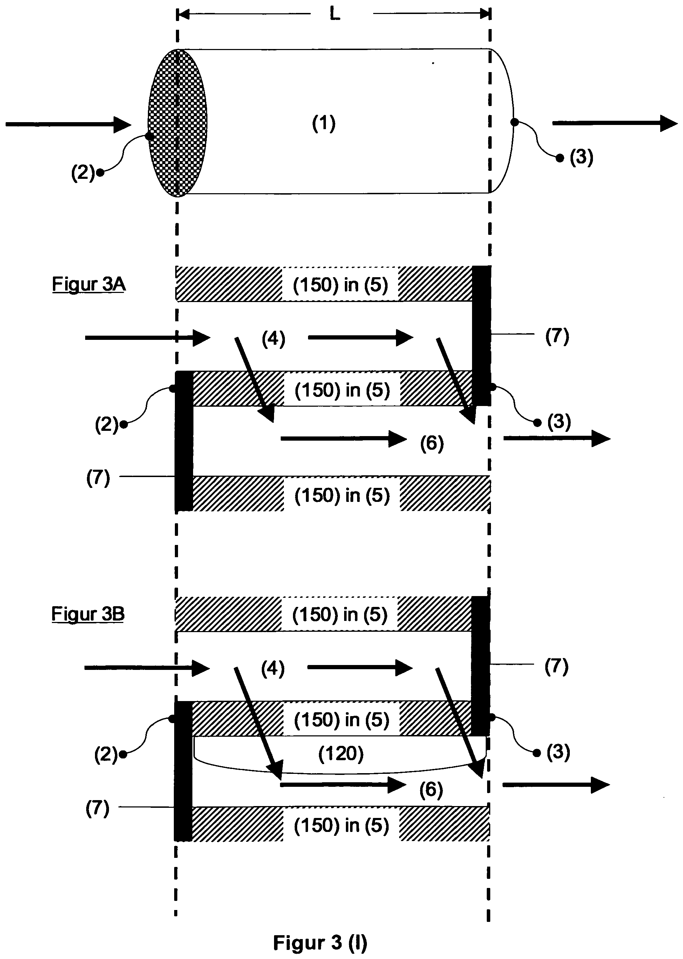

In den bevorzugten Ausführungsformen dieser Erfindung liegt das Im katalytisch aktivierten Partikelfilter vorhandene katalytisch aktive Material als katalytisch aktive Beschichtung vor, welche die selektive katalytische Reduktion von Stickoxiden zu Stickstoff fördert (SCR-Beschichtung). Besonders bevorzugt ist eine solche katalytisch aktive Beschichtung in die poröse Wand, die die Anström- und Abströmkanäle räumlich voneinander trennt, eines ansonsten katalytisch inerten Wandflußfiltersubstrates eingebracht, so daß diese poröse Wand die entsprechende SCR-Beschichtung mitumfasst. Eine entsprechende Ausführungsform ist in Figur 3A schematisch dargestelit.

Das In das katalytisch aktivierte Partikelfilter eintretende Abgas enthält, neben gegebenenfalls vorhandenen Spuren von Kohlenmonoxid und Kohlenwasserstoffen aus einer nicht vollständigen Umsetzung im vorgelagerten Dieseloxidationskatalysator, vor allem Rußpartikel, sowie Stickstoffmonoxid und Stickstoffdioxid und Ammoniak. Beim Durchtritt des Abgases durch die Wand verbleiben die Rußpartikel in den Anströmkanälen. Dort werden sie - in Abhängigkeit von der Abgastemperatur wenigstens anteilig - mit dem ebenfalls im Abgas vorhandenen Stickstoffdioxid unter Bildung von Stickstoffmonoxid zu gasförmigem Kohlenmonoxid und/oder Kohlendioxid oxidiert (sogenannte "CRT-Reaktion" gemäß dem Im EP-B-0 341 832 beschriebenen Verfahren). Stickstoffmonoxid und in der Oxidation der Rußpartikel nicht umgesetztes Stickstoffdioxid werden beim Durchtritt durch die Wand am SCR-ketalytisch aktiven Material bzw. an der SCR-katalytisch aktiven Beschichtung mit Ammoniak wenigstens anteilig zu Stickstoff umgesetzt.

Es ist bekannt, daß die SCR-Reaktion mit Ammoniak in Abhängigkeit vom im Abgas enthaltenen Verhältnis von Stickstoffmonoxid zu Stickstoffdioxid nach drei verschiedenen Reaktionsmechanismen ablaufen kann, nämlich:

(1) NO + NO₂ + 2 NH₃ → 2N₂ + 3H₂O

(2) 2 NO + 2 NH₃+ ½ O₂ → 2 N₂ + 3 H₂O

(3) 6 NO₂ + 8 NH₃ → 7 N₂ + 12 H₂O

Von diesen Reaktionen verläuft Reaktion (1) am schnellsten, Reaktion (3) am langsamsten. Die SCR-Reaktion wird also dann besonders gefördert, wenn das Molverhältnis von Stickstoffmonoxid zu Stickstoffdioxid im Abgas bei ungefähr 1:1 liegt.

Da auch durch die CRT-Reaktion Stickstoffdioxid verbraucht wird, kommt es im katalytisch aktivierten Partikelfilter zu einer Konkurrenz zwischen einer effektiven Rußpartikeloxidation einerseits und der selektiven katalytischen Reduktion der Stickoxide zu Stickxtoff andererseits. Unter Betriebsbedingungen, bei denen die CRT-Reaktion besonders effektiv verläuft, tritt nur noch wenig Stickstoffdioxid durch die das SCR-katalytisch aktive Material bzw. die SCR-katalytisch aktive Beschichtung umfassende Wand zwischen An- und Abströmkanälen, so daß dort überwiegend Reaktion (2) abläuft. Dies kann eine Verminderung der Entstickungseffizienz zur Folge haben. Um den NOₓ-Umsatz des Gesamtsystems zu vervollständigen, ist es deshalb notwendig, nach dem katalytisch aktiven Partikelfilter eine zweite Vorrichtung zur Zugabe von Ammoniak und/oder einer zu Ammoniak zersetzlichen Verbindung und einen SCR-Katalysator vorzusehen, an dem der Umsatz der restlichen Stickoxide mit Ammoniak zu Stickstoff erfolgen kann. Dabei kann im Vergleich zu Systemen nach dem Stand der Technik jedoch ein erheblich kleineres SCR-Katalysatorvolumen gewählt werden, da ein Großteil der Reduktion der Stickoxide zu Stickstoff bereits im vorgelagerten katalytisch aktiven Partikelfilter erfolgt ist.

In besonders bevorzugten Ausführungsformen der erfindungsgemäßen Vorrichtung kann eine weitere Steigerung der Entstickungseffizienz dadurch erzielt werden, daß das katalytisch aktivierte Partikelfilter desweiteren mindestens eine katalytisch aktive Beschichtung enthält, weiche die Oxidation von Kohlenmonoxid und Kohlenwasserstoffen zu Kohlendioxid und die Oxidation von Stickstoffmonoxid zu Stickstoffdioxid fördert. Insbesondere kann eine solche oxidationskatalytische Beschichtung in den Abströmkanälen auf der Wand aufgebracht sein, wie in Figur 3B schematisch dargestellt. Diese oxidationskatalytisch aktive Beschichtung kann über die gesamte Länge L des Wandflußfiltersubstrates oder als abströmseitige Zone aufgebracht sein. An dieser oxidationskatalytischen Beschichtung kann durch wenigstens teilweise Oxidation des durch die Wand tretenden Stickstoffmonoxids das Molverhältnis von Stickstoffmonoxid zu Stickstoffdioxid wieder auf einen Wert nahe 1 : 1 angepasst werden. Dadurch erfolgt eine weitere Erhöhung der Entstickungseffizienz des nachgelagerten SCR-Katalysators, wodurch zusätzliche Volumeneinsparungen des nachgelagerten SCR-Katalysators möglich werden. Eine in den Abströmkanälen angeordnete oxidationskatalytisch aktive Beschichtung führt überdies dazu, daß aus der CRT-Reaktion resultierende Kohlenmonoxid-Sekundäremissionen mit im Abgas vorhandenem Sauerstoff zu unschädlichem Kohlendioxid umgesetzt werden können.

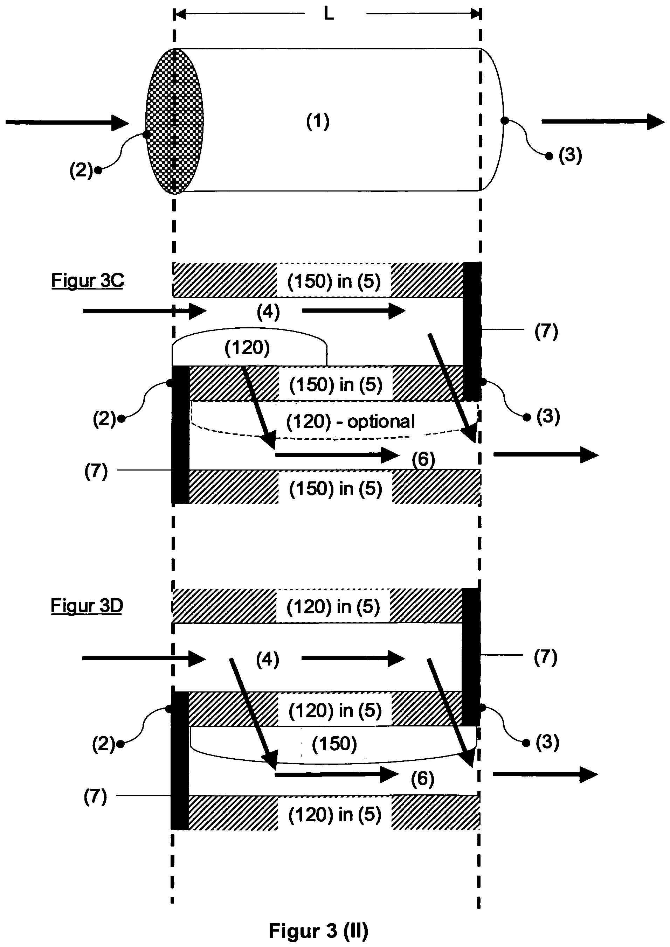

Darüberhinaus kann in ganz besonders bevorzugten Ausführungsformen der erfindungsgemäßen Vorrichtung eine weitere oxidationskatalytische Beschichtung In den Anströmkanälen des katalytisch aktiven Partikelfilters aufgebracht sein. Eine solche Beschichtung wird bevorzugt als anströmseitige Zone über einen Teil der Länge L des Wandflußfiltersubstrates aufgebracht, wie in Figur 3C schematisch dargestellt. Ist die Oxidationskraft der derart aufgebrachten Beschichtung ausreichend, um die Im Rohabgas des Dieselmotors vorhandenen Anteile von Kohlenmonoxid und Kohlenwasserstoffen hinteichend zu oxidieren und darüberhinaus ausreichende Konvertierungsraten für Stickstoffmonoxid zu Stickstoffdioxid bereit zu stellen, so kann der vorgelagerte Dieseloxidationskatalysator gegebenenfalls, nicht Gegenstand der Erfindung, vollständig eingespart und der für das Gesamtsystem benötigte Bauraum signifikant verkleinert werden.

Wie bereits vorstehend erläutert, liegt im in der erfindungsgemäßen Vorrichtung bzw. im erfindungsgemäßen Verfahren zum Einsatz kommenden katalytisch aktivierten Partikelfilter ein Zielkonflikt zwischen einer hohen Rußpartikeloxidation einerseits und einer möglichst effektiven Verminderung der Stickoxide andererseits vor, da die dem Rußabbrand zugrunde liegende CRT-Reaktion und die SCR-Reaktion um den Reaktanden Stickstoffdioxid konkurieren. Die vorstehend beschriebenen Ausführungsformen sind vor allem dann gut geeignet, wenn die Erhöhung der Entstickungseffiztenz des Gesamtsystems neben den zu erzielenden Bauraumeinsparungen im Vordergrund steht.

Soll die Effizienz des Systems neben der durch die Volumeneinsparung des nachgelagerten SCR-Katalysators erzielten Bauraumeinsparung bezüglich der CRT-Reaktion gesteigert werden, so sind Ausführungsformen besonders bevorzugt, bei denen eine katalytisch aktive Beschichtung zur selektiven katalytischen Reduktion im katalytisch aktivierten Partikelfilter in den Abströmkanälen auf der porösen Wand aufgebracht Ist. Dadurch wird das in das Partikelfilter einströmende, Stickstoffdioxid enthaltende Abgas zunächst vollständig mit den zu oxidlerenden Rußpartikeln, die In den Abströmkanälen abgeschieden werden, in Kontakt gebracht. Der Kontakt mit der SCR-katalytisch aktiven Beschichtung erfolgt erst danauch - räumlich getrennt -in den Abströmkanälen,

Ganz besonders bevorzugt sind dabei Ausführungsformen, die im katalytisch aktivierten Partikelfilter, wie in Figur 3D dargestellt, zusätzlich eine oxidationskatalytisch aktive Beschichtung und/oder eine die Rußzündtemperatur senkende Beschichtung in der porösen Wand zwischen Anström- und Abströmkanälen aufweisen.

Um eine anwendungsbezogene Steuerung der Entstickungseffizienz vornehmen zu können, umfasst der erfindungsgemäßen Vorrichtung desweiteren Sensoren zur Bestimmung des Stickoxidgehaltes im zu reinigenden Abgas. Bevorzugt ist in Strömungsrichtung des Abgases ein erster dieser Sensoren vor oder hinter dem Dieseloxidationskatalysator angeordnet, während ein zweiter Sensor zwischen dem katalytisch aktivierten Partikelfilter und der zweiten Vorrichtung zur Zugabe von Ammoniak und/oder einer zu Ammoniak zersetzlichen Verbindung in das zu reinigende Abgas angeordnet ist. Diese beiden Sensoren ermöglichen eine genaue Berechnung der zur Entstickung des Abgases notwendigen Dosiermenge von Ammoniak bzw. einer zu Ammoniak zersetzlichen Verbindung. In bevorzugten Ausführungsformen befindet sich ein dritter Sensor zur Bestimmung des Stickoxidgehaltes im Abgas In Strömungsrichtung des Abgases hinter dem nachgeordneten SCR-Katalysator. Durch diesen dritten Sensor können Diagnosemodule zur Überwachung der zu erzielenden Entstickungseffizienz des Gesamtsystems bereit gesteilt werden.

Da die Sensoren zur Bestimmung des Stickoxidgehaltes im (zu reinigenden) Abgas Querempfindlichkeiten hinsichtlich Ammoniak zeigen, so daß im Abgas enthaltenes Ammoniak zu Verfälschungen der Erfassungswerte für Stickoxid führt, ist es insbesondere in Fällen, in denen das katalytisch aktivierte Partikelfilter keine abströmseitige, oxidationskatalytische Beschichtung enthält, vorteilhaft, wenn abströmssitig zum katalytisch aktivierten Partikelfilter und anströmseitig zum zweiten Sensor zur Bestimmung des Stickoxidgehaltes im zu reinigenden Abgas ein Oxidationskatalysator angeordnet ist, der die Oxidation von Ammoniak fördert. Da ein solcher Katalysator sehr klein ausgeführt und in einem Katalysatorgehäuse unmittelbar an die Auslaßseite des Partikelfilters angeschlossen werden kann, fällt der durch Integration eines solchen Katalysators auftretende Bauraumverlust gegenüber der Katalysatorvolumeneinsaprung am nachfolgenden SCR-Katalysator gegenüber Verfahren und Vorrichtungen nach dem Stand der Technik kaum Ins Gewicht.

Um den Austritt von Ammoniak In die Umwelt wirksam zu verhindern, ist in bevorzugten Ausführungsformen der erfindungsgemäßen Vorrichtung abströmseitig zum Katalysator zur selektiven katalytischen Reduktion von Stickoxiden ein weiterer Katalysator zur Oxidation von Ammoniak angeordnet. Um die erzielbaren Bauraumelnsparungen nicht unnötig zu beeinträchtigen, wird dieser besonders bevorzugt als abströmseitige Beschichtungszone auf dem SCR-Katalysator angeordnet (-sogenannter integrierter Ammoniakschlupfkatalysator-) und weist eine möglichst hohe Selektivität zu Stickstoff auf.

Die erfindungsgemäße Vorrichtung und das erfindungsgemäße Verfahren weisen In Ihrer konkreten Ausgestaltbarkeit eine ausgesprochen hohe Flexibilität auf, die es ermöglicht, für Dieselmotoren verschiedenster Leistungsklassen hinsichtlich Abgasreinigungseffizienz und Bauraumerfordernissen optimierte Lösungen zu finden. So können durch Auswahl der verschiedenen katalytisch aktiven Beschichtungen und ihrer Anordnung im katalytisch aktivierten Partikelfilter in Verbindung mit einer angepaßten Steuerung der Reduktionsmittelzugabe über die zwei vorhandenen Zugabevorrichtungen für Ammoniak und/oder eine zu Ammoniak zersetzliche Verbindung unterschiedliche Reinigungsaufgaben, die sich aus der Einstellung der Verbrennung im Brennraum des Dieselmotors für verschiedene Leistungsklassen und aus der Verwendung unterschiedlicher Dieselkraftstoffe ergeben, optimal gelöst werden. Das Abgas von Dieselmotoren unterschiedlicher Leistungsklassen, die gegebenenfalls mit unterschiedlichen Dieselkraftstoffqualitäten betrieben werden, unterscheidet sich im Verhältnis der im Abgas enthaltenen Schadstoffe Kohlenmonoxid, Kohlenwasserstoffe, Stickoxide und Partikel ebenso, wie In Abgastemperatur, Abgasmassenstrom und dem Anteil möglicher Katalysatorgifte wie beispielsweise Schwefeloxide.

Die im katalytisch aktivierten Partikelfilter enthaltene katalytisch aktive Beschichtung, welche die selektive katalytische Reduktion von Stickoxiden zu Stickstoff fördert (SCR-Beschichtung), enthält bevorzugt eine oder mehrere Aktivkomponenten ausgewählt aus:
o Übergangsmetalloxiden ausgewählt aus der Gruppe bestehend aus Vanadiumoxid, Wolframoxid, Titanoxid, Ceroxid, Zirkonoxid, Lanthanoxid, Praseodymoxid, Neodymoxid, Nioboxid, Molybdänoxid, Eisenoxid und/oder Mischungen und Mischoxide davon;
∘ mit einem oder mehreren Übergangsmetallen ausgetauschten Zeolithen und/oder zeolithähnlichen Verbindungen, wobei die Übergangsmetalle ausgewählt sind aus der Gruppe bestehend aus Eisen, Kupfer, Platin, Iridium, Silber, Cer und/oder Mischungen davon; und wobei die Zeolithe und/oder die zeolithähnllchen Verbindungen ausgewählt sind aus der Gruppe bestehend aus ZSM-5, ZSM-20, USY, β-Zeolith, FER, MOR, CHA, SAPO, ALPO und/oder Mischungen davon.

Die aus diesen Stoffgruppen ausgewählten Aktivkomponenten zeigen unterschiedliche Arbeitstemperatur- und Selektivitätsbereiche und unterschiedliche Vergiftungsanfälligkeiten So zeichnen sich beispielsweise vanadiumoxidhaltige SCR-Beschichtungen unter anderem dadurch aus, daß im Abgas enthaltene Kohlenwasserstoffe an solchen bereits bei mittleren Abgastemperaturen oxidiert werden können, ohne daß dabei die NOₓ-Konvertiernngseffizienz der Beschichtung leidet. Dafür weisen vanadiumoxidhaltige SCR-Beschichtungen bei Betriebstemperaturen oberhalb von 460°C einen Verlust der Selektivität zu Stickstoff auf, da es bei diesen Temperaturen zu Ammoniaküberoxidationen zu Stickoxiden kommt. Im Unterschied dazu zeichnen sich SCR-Beschichtungen, die überwiegend mit Eisen ausgetauschte Zeolithe enthalten, dadurch aus, daß sie auch im Temperaturbereich oberhalb von 450°C exzellente NOₓ-Konvertierungsraten zu Stickstoff aufweisen; sie sind jedoch leider sehr anfällig gegenüber der Vergiftung durch Kohlenwasserstoffe. Vor diesem Hintergrund werden mit einer vanadiumoxidhaltigen SCR-Beschichtung im anströmseltlgen katalytisch aktivierten Partikelfilter und einem abströmseitigen SCR-Katalysator enthaltend mit Eisen ausgetauschten Zeolithen insbesondere dann exzellente Entstlckungsefflzienzen erreicht, wenn das zu reinigende Abgas relativ hohe Kohlenwasserstoffkonzentrationen aufweist, die durch den anströmseitigen Dieseloxidationskatalysator nicht vollständig entfernt werden können; und/oder wenn Betriebsbedingungen vorliegen, unter denen in den Anströmkanälen des katalytische aktivierten Partikelfilters beim Rußabbrand Kohlenwasserstoffsekundäremissionen gebildet werden; und/oder wenn ergänzend zur passiven Partikelfilterregeneration (CRT-Effekt) Aufheizmaßnahmen zur aktiven Partikelfilterregeneration ergriffen werden, während deren signikant erhöhte Kohlenwasserstoffgehalte im zu reinigenden Abgas vor Partikelfilter auftreten können.

Ein weiteres Beispiel für eine vorteilhafte Ausgestaltung der SCR-Beschichtung Im katalytisch aktivierten Partikelfilter einerseits und des abströmseitig angeordneten SCR-Katalysators andererseits ist die Kombination einer SCR-Beschichtung enthaltend mit Kupfer ausgetauschte Zeolithe und/oder zeolithähnliche Verbindungen im katalytisch aktivierten Partikelfilter einerseits und mit Eisen ausgetauschte Zeolithe im abströmseitigen SCR-Katalysator andererseits.

Wird das System mit einem schwefelhaltigen Dieselkraftstoff betrieben, so zeigt die im katalytisch aktivierten Partikelfilter enthaltene kupferhaltige SCR-Beschichtung eine höhere Vergiftungsanfälligkeit gegenüber Schwefeloxiden, während die eisenhaltige SCR-Katalysatorbeschichtung als schwefelresistent einzustufen ist. Da das katalytisch aktivierte Partikelfilter aufgrund seiner motornäheren Einbauposition jedoch deutlich höheren Abgastemperaturen ausgesetzt ist, als der nachgelagerte SCR-Katalysator, ist eine regelmäßige Entschwefelung der kupferhaltigen Beschichtung im Betrieb sichergestellt. Somit ist die SOₓ-Vergiftungsanfälligkeit der SCR-Beschichtung im katalytisch aktivierten Filter in dieser Anordnung hinsichtlich der Entstickungseffizienz unschädlich.

Wird ein entsprechendes System mit schwefelarmem Dieselkraftstoff betrieben, so wird das katalytisch aktivierte Partikelfilter vorteilhafterweise mit einer SCR-Beschichtung ausgestattet, die mit Eisen ausgetauschte Zeolithe enthält, während sich zur Beschichtung des nachgelagerten SCR-Katalysators mit Kupfer ausgetauschte Zeolithe eignen. Diese Anordnung trägt der Tatsache Rechnung, daß mit Eisen ausgetauschte Zeolithe typischerweise optimale NOₓ-Wirkungsgrade im Temperaturbereich zwischen 350°C und 550°C zeigen, während mit Kupfer ausgetauschte Zeolithe und/oder zeolithähnliche Verbindungen optimale NOₓ-Wirkungsgrade im Temperaturbereich zwischen 250°C und 400°C zeigen, bei höheren Temperaturen aber zur Überoxidation von Ammoniak neigen. Die vorstehend genannte Anordnung der Beschichtungen trägt der in Strömungsrichtung abfallenden Abgastemperatur Rechnung.

Weitere vorteilhafte Ausführungsformen der erfindungsgemäßen Vorrichtung und des erfindungsgemäßen Verfahrens ließen sich aufzählen, ergeben sich für den Fachmann aus der technischen Lehre dieser Erfindung unter zumutbarem experimentellen Aufwand jedoch von selbst und sind vom Anspruchsurnfang umfasst.

Weitere optimale Anpassungen an die gestellte Abgasreinigungsaufgabe unter gleichzeitiger Optimierung des für die erfindungsgemäße Vorrichtung benötigten Bauraums ergeben sich aus einer gezielt angepassten Steuerung der Zugabemengen von Ammoniak und/oder einer zu Ammoniak zersetzlichen Verbindung als Reduktionsmittel über die beiden in der erfindungsgemäßen Vorrichtung vorhandenen Zugabevorrichtungen.

So sind Ausführungsformen des erfindungsgemäßen Verfahrens, die dadurch gekennzeichnet sind, daß die erste Zugabe von Ammoniak und/oder einer zu Ammoniak zersetzlichen Verbindung zum zu reinigenden Abgas so erfolgt, daß die zugegebene bzw. aus der Verbindung entstehende Menge Ammoniak größer ist, als die zur Reduktion der im zu reinigenden Abgas enthaltenen Stickoxide zu Stickstoff gemäß der entsprechenden Reaktionsstöchiometrie erforderliche Menge Ammoniak, insbesondere dann bevorzugt, wenn die NOₓ-Konvertierungseffizienz des katalytisch aktivierten Partikelfilters Ins maximal mögliche gesteigert werden soll, so daß hinsichtlich des nachgelagerten SCR-Katalysator das kleinstmögliche Volumen erzielt wird. Gegebenenfalls aus der Überoxidation von Ammoniak im katalytisch aktivierten Partikelfilter resultierende Stickoxide können im nachgelagerten SCR-Katalysator umgesetzt werden. Dabei wird die über die zweite Zugabevorrichtung zugegebene Menge an Ammoniak und/oder einer zu Ammoniak zersetzlichen Verbindung bevorzugt so gesteuert, daß die zugegebene bzw. aus der Zersetzung der Verbindung resultierende Menge an Ammoniak der gemäß der entsprechenden Reaktionsstöchiometrie erforderlichen Menge Ammoniak entspricht. Um die Entstickungseffizienz des Gesamtsystems weiter zu erhöhen wird in einer solchen Ausführungsform des erfindungsgemäßen Verfahrens besonders bevorzugt ein katalytisch aktiviertes Partikelfilter eingesetzt, das eine SCR-Beschichtung In der porösen Wand zwischen Anström- und Abströmkanälen und einer oxidationskatalytisch aktive Beschichtung auf der Wand In den Abströmkanälen aufweist (siehe Figur 3B), um für den nachgelagerten SCR-Katalysator emeut ein hinsichtlich der SCR-Reaktion (1) optimiertes Verhältnis von NO und NO₂ zur Verfügung zu stellen.

Wird für den Betrieb der erfindungsgemäßen Vorrichtung besonderer Wert auf eine hohe CRT-Reaktionsrate gelegt, so sind Ausführungsformen des erfindungsgemäßen Verfahrens besonders bevorzugt, bei denen die erste Zugabe von Ammoniak und/oder einer zu Ammoniak zersetzlichen Verbindung zum zu reinigenden Abgas so erfolgt, daß die zugegebene bzw. aus der Verbindung entstehende Menge Ammoniak kleiner ist, als die zur Reduktion der im zu reinigenden Abgas enthaltenen Stickoxide zu Stickstoff gemäß der entsprechenden Reaktionsstöchiometrie erforderlichen Menge Ammoniak. In diesem Fall steht für die Im katalytisch aktiven Partikelfilter in Konkurrenz zur CRT-Reaktion ablaufenden SCR-Reaktion nicht ausreichend Reduktionsmittel für einen vollständigen NOₓ-Umsatz zur Verfügung, so daß höhere Mengen NO₂ für die CRT-Reaktion zur Verfügung stehen.

Vorstehend wird das erfindungsgemäße System beschrieben, wobei ausschließlich auf die Verwendung von Ammoniak und/oder einer zu Ammoniak zersetzlichen Verbindung als Reduktionsmittel abgestellt wird. Es sei darauf hingewiesen, daß grundsätzlich auch andere Reduktionsmittel zur selektiven katalytischen Reduktion von Stickstoff nach dem SCR-Verfahren geeignet sind. Dies gilt insbesondere für Kohlenwasserstoffe, In diesem Falle läuft die SCR-Reaktion nach dem sogenannten "HC-DeNOx"-Prinzip ab. Die erfindungsgemäße Vorrichtung und das erfindungsgemäße Verfahren eignen sich in analoger Weise auch bei Verwendung entsprechender Reduktionsmittel anstelle von Ammoniak, wobei einige applikative Anpassungen, die sich dem Fachmann aus üblichen Routineversuchen zur Applikation ergeben, notwendig sind.

Die Erfindung wird im folgenden an Hand einiger Figuren näher erläutert. Es zeigen:
**Figur 1****:** Schematische Darstellung eines Wandflußfiltersubstrats; darin bezeichnet:
   L die Gesamtlänge des Wandflußfiltersubstrats;
   → die Strömungsrichtung des Abgases;
      (1) das Wandflußfiltersubstrat;
      (2) die Einlaßseite des Wandflußflitersubstrats;
      (3) die Auslaßseite des Wandflußflitersubstrats;
      (4) Anströmkanäle;
      (5) die poröse Wand, die Anström- und Abströmkanäle räumlich voneinander trennt;
      (6) Abströmkanäle;
      (7) gasdichter Verschluß der Anström- bzw. Abströmkanäle;
      (8) Rußpartikel.

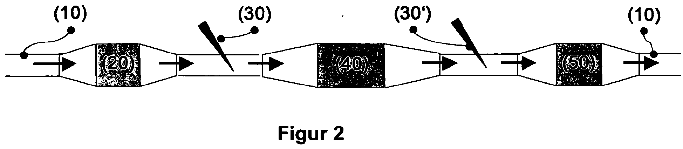

**Figur 2****:** Schematische Darstellung der erfindungsgemäßen Vorrichtung;
   darin bezeichnet:
   → die Strömungsrichtung des Abgases;
   (10) eine Abgasleitung;
   (20) einen Dieseloxidationskatalysator;
   (30), (30') Zugabevorrichtungen für Ammoniak und/oder eine zu Ammoniak zersetzliche Verbindung;
   (40) ein katalytisch aktiviertes Partikelfilter enthaltend ein Wandflußfiltersubstrat mit einer katalytisch aktiven Beschichtung, welche die selektive katalytische Reduktion von Stickoxiden zu Stickstoff fördert;
   (50) einen SCR-Katalysator.
**Figur 3****:** Verschiedene Ausführungsformen des in der erfindungsgemäßen Vorrichtung und im erfindungsgemäßen Verfahren eingesetzten katalytisch aktivierten Partikelfilters;
   darin bezeichnet:
   L die Gesamtlänge des Wandflußfiltersubstrats;
   → die Strömungsrichtung des Abgases;
      (1) das Wandflußfiltersubstrat;
      (2) die Einlaßseite des Wandflußfiltersubstrats;
      (3) die Auslaßseite des Wandflußfiltersubstrats;
      (4) Anströmkanäle;
      (5) die poröse Wand, die Anström- und Abströmkanäle räumlich voneinander trennt;
      (6) Abströmkanäle;
      (7) gasdichter Verschluß der Anström- bzw. Abströmkanäle;
      (150) eine SCR-katalytisch aktive Beschichtung;
      (120) eine oxidationskatalytisch aktive Beschichtung.

## Patentansprüche

1. Vorrichtung zur Verminderung von Kohlenmonoxid, Kohlenwasserstoffen, Stickoxiden und Rußpartikeln in Dieselmotorenabgasen umfassend eine Abgasleitung (10) und als Bestandteil derselben in Kombination und in Strömungsrichtung des Abgases in dieser Reihenfolge
1. einen Dieseloxidationskatalysator (20) zur Oxidation von Kohlenmonoxid,
2. eine erste Vorrichtung zur Zugabe von Ammoniak (30) und/oder einer zu Ammoniak zersetzlichen Verbindung in das zu reinigende Abgas;
3. ein katalytisch aktiviertes Partikelfilter (40) enthaltend ein Wandflußfiltersubstrat, das ein katalytisch aktives Material umfasst, welches die selektive katalytische Reduktion von Stickoxiden zu Stickstoff fördert;
4. eine zweite Vorrichtung zur Zugabe von Ammoniak (30') und/oder einer zu Ammoniak zersetzlichen Verbindung in das zu reinigende Abgas; sowie
5. einen Katalysator (50) zur selektiven katalytischen Reduktion von Stickoxiden zu Stickstoff, **dadurch gekennzeichnet, daß** ein erster Sensor zur Bestimmung des Stickoxidgehaltes im zu reinigenden Abgas in Strömungsrichtung des Abgases vor oder hinter dem Dieseloxidationskatalysator (20) angeordnet ist, während ein zweiter Sensor zur Bestimmung des Stickoxidgehaltes im zu reinigenden Abgas zwischen dem katalytisch aktivierten Partikelfilter (40) und der zweiten Vorrichtung zur Zugabe von Ammoniak (30') und/oder einer zu Ammoniak zersetzlichen Verbindung in das zu reinigende Abgas angeordnet ist.

2. Vorrichtung nach Anspruch 1,
**dadurch gekennzeichnet, daß** das im katalytisch aktivierten Partikelfilter (40) enthaltene katalytisch aktive Material eine katalytisch aktive Beschichtung ist, die die selektive katalytische Reduktion von Stickoxiden zu Stickstoff fördert.

3. Vorrichtung nach Anspruch 2,
**dadurch gekennzeichnet, daß** das Wandflußfiltersubstrat (1) auf der Abströmseite gasdicht verschlossene Anströmkanäle (4) und auf der Anströmseite gasdicht verschlossene Abströmkanäle aufweist, sowie eine poröse Wand, die die An- und Abströmkanäle räumlich voneineinander trennt, die für das zu reinigende Abgas durchlässig ist und die die katalytisch aktive Beschichtung zur selektiven katalytischen Reduktion von Stickoxiden zu Stickstoff umfasst.

4. Vorrichtung nach Anspruch 2,
**dadurch gekennzeichnet,**
**daß** das Wandflußfiltersubstrat (1) auf der Abströmseite gasdicht verschlossene Anströmkanäle und auf der Anströmseite gasdicht verschlossene Abströmkanäle aufweist, sowie eine poröse Wand, die die An- und Abströmkanäle räumlich voneineinander trennt und die für das zu reinigende Abgas durchlässig ist, und wobei die katalytisch aktive Beschichtung zur selektiven katalytischen Reduktion von Stickoxiden zu Stickstoff in den Abströmkanälen auf der porösen Wand aufgebracht ist.

5. Vorrichtung nach Anspruch 1,
**dadurch gekennzeichnet,**
**daß** in Strömungsrichtung des Abgases ein dritter Sensor zur Bestimmung des Stickoxidgehaltes im Abgas hinter dem SCR-Katalysator (50) angeordnet ist.

6. Vorrichtung nach einem der Ansprüche 1 oder 5,
**dadurch gekennzeichnet,**
**daß** abströmseitig zum katalytisch aktivierten Partikelfilter (40) und anströmseitig zum zweiten Sensor zur Bestimmung des Stickoxidgehaltes im zu reinigenden Abgas ein Oxidationskatalysator angeordnet ist, der die Oxidation von Ammoniak fördert.

7. Vorrichtung nach einem der vorstehenden Ansprüche,
**dadurch gekennzeichnet,**
**daß** abströmseitig zum Katalysator zur selektiven katalytischen Reduktion von Stickoxiden ein Katalysator zur Oxidation von Ammoniak angeordnet ist.

8. Vorrichtung nach Anspruch 1,
**dadurch gekennzeichnet,**
**daß** das katalytisch aktivierte Partikelfilter desweiteren mindestens eine katalytisch aktiven Beschichtung enthält, welche die Oxidation von Kohlenmonoxid und Kohlenwasserstoffen zu Kohlendioxid und die Oxidation von Stickstoffmonoxid zu Stickstoffdioxid fördert.

9. Verfahren zur Verminderung von Kohlenmonoxid, Kohlenwasserstoffen, Stickoxiden und Rußpartikeln in Dieselmotorenabgasen umfassend :
1. Durchleiten des zu reinigenden Dieselmotorenabgases durch einen Dieseloxidationskatalysator, wobei Kohlenmonoxid und Kohlenwasserstoffe wenigstens anteilig zu Kohlendioxid oxidiert werden und Stickstoffmonoxid wenigstens anteilig zu Stickstoffdioxid oxidiert wird;
2. eine erste Zugabe von Ammoniak (30) und/oder einer zu Ammoniak zersetzlichen Verbindung zum zu reinigenden Abgas abströmseitig zum Dieseloxidationskatalysator;
3. Durchleiten des zu reinigenden Abgases nach der ersten Zugabe von Ammoniak und/oder einer zu Ammoniak zersetzlichen Verbindung durch ein katalytisch aktiviertes Partikelfilter (40), wobei die Rußpartikel im Partikelfilter abgeschieden und wenigstens anteilig mit dem im Abgas enthaltenen Stickstoffdioxid zu Kohlenmonoxid und/oder Kohlendioxid oxidiert werden und wobei die im zu reinigenden Abgas enthaltenen und/oder bei der Rußoxidation als Nebenprodukt entstehenden Stickoxide wenigstens anteilig mit Ammoniak zu Stickstoff reduziert werden;
4. eine zweite Zugabe von Ammoniak (30') und/oder einer zu Ammoniak zersetzlichen Verbindung zum zu reinigenden Abgas abströmseitig zum Partikelfilter; sowie
5. Durchleiten des zu reinigenden Abgases nach der zweiten Zugabe von Ammoniak und/oder einer zu Ammoniak zersetzlichen Verbindung durch einen Katalysator (50) zur selektiven katalytischen Reduktion von Stickoxiden, wobei Stickstoffmonoxid und Stickstoffdioxid wenigstens anteilig mit Ammoniak zu Stickstoff reduziert werden, **dadurch gekennzeichnet, daß** ein erster Sensor zur Bestimmung des Stickoxidgehaltes im zu reinigenden Abgas in Strömungsrichtung des Abgases vor oder hinter dem Dieseloxidationskatalysator (20) angeordnet ist, während ein zweiter Sensor zur Bestimmung des Stickoxidgehaltes im zu reinigenden Abgas zwischen dem katalytisch aktivierten Partikelfilter (40) und der zweiten Vorrichtung zur Zugabe von Ammoniak (30') und/oder einer zu Ammoniak zersetzlichen Verbindung in das zu reinigende Abgas angeordnet ist.

10. Verfahren nach Anspruch 9,
**dadurch gekennzeichnet,**
**daß** die erste Zugabe von Ammoniak und/oder einer zu Ammoniak zersetzlichen Verbindung zum zu reinigenden Abgas so erfolgt, daß die zugegebene bzw. aus der Verbindung entstehende Menge Ammoniak größer ist, als die zur Reduktion der im zu reinigenden Abgas enthaltenen Stickoxide zu Stickstoff gemäß der entsprechenden Reaktionsstöchiometrie erforderliche Menge Ammoniak.

11. Verfahren nach Anspruch 9,
**dadurch gekennzeichnet,**
**daß** die erste Zugabe von Ammoniak und/oder einer zu Ammoniak zersetzlichen Verbindung zum zu reinigenden Abgas so erfolgt, daß die zugegebene bzw. aus der Verbindung entstehende Menge Ammoniak kleiner ist, als die zur Reduktion der im zu reinigenden Abgas enthaltenen Stickoxide zu Stickstoff gemäß der entsprechenden Reaktionsstöchiometrie erforderliche Menge Ammoniak.

## Claims

1. Apparatus for abatement of carbon monoxide, hydrocarbons, nitrogen oxides and soot particles in diesel engine exhaust gases comprising an exhaust gas conduit (10) and as a constituent of same in combination and in the flow direction of the exhaust gas in the following sequence:
1. a diesel oxidation catalyst (20) for oxidation of carbon monoxide, hydrocarbons and nitrogen monoxide;
2. a first apparatus for addition of ammonia (30) and/or a compound decomposable to ammonia to the exhaust gas to be cleaned;
3. a catalytically activated particle filter (40) containing a wall flow filter substrate comprising a catalytically active material which promotes the selective catalytic reduction of nitrogen oxides to nitrogen;
4. a second apparatus for addition of ammonia (30') and/or a compound decomposable to ammonia to the exhaust gas to be cleaned; and
5. a catalyst (50) for selective catalytic reduction of nitrogen oxides to nitrogen,
**characterized in that** a first sensor for determining the nitrogen oxide content in the exhaust gas to be cleaned is arranged upstream or downstream of the diesel oxidation catalyst (20) in the flow direction of the exhaust gas while a second sensor for determining the nitrogen oxide content in the exhaust gas to be cleaned is arranged between the catalytically activated particle filter (40) and the second apparatus for addition of ammonia (30') and/or a compound decomposable to ammonia to the exhaust gas to be cleaned.

2. Apparatus according to Claim 1, **characterized in that** the catalytically active material present in the catalytically activated particle filter (40) is a catalytically active coating which promotes the selective catalytic reduction of nitrogen oxides to nitrogen.

3. Apparatus according to Claim 2, **characterized in that** the wall flow filter substrate (1) has inflow channels (4) gastightly sealed on the outflow side and outflow channels gastightly sealed on the inflow side and a porous wall which spatially separates the inflow and outflow channels from one another and is permeable to the exhaust gas to be cleaned and comprises the catalytically active coating for selective catalytic reduction of nitrogen oxides to nitrogen.

4. Apparatus according to Claim 2, **characterized in that** the wall flow filter substrate (1) has inflow channels gastightly sealed on the outflow side and outflow channels gastightly sealed on the inflow side and a porous wall which spatially separates the inflow and outflow channels from one another and is permeable to the exhaust gas to be cleaned and wherein the catalytically active coating for selective catalytic reduction of nitrogen oxides to nitrogen has been applied in the outflow channels on the porous wall.

5. Apparatus according to Claim 1, **characterized in that**, in the flow direction of the exhaust gas, a third sensor for determining the nitrogen oxide content in the exhaust gas is arranged downstream of the SCR catalyst (50).

6. Apparatus according to either of Claims 1 or 5, **characterized in that** an oxidation catalyst which promotes the oxidation of ammonia is arranged on the outflow side relative to the catalytically activated particle filter (40) and on the inflow side relative to the second sensor for determining the nitrogen content in the exhaust gas to be cleaned.

7. Apparatus according to any of the preceding claims, **characterized in that** a catalyst for oxidation of ammonia is arranged on the outflow side relative to the catalyst for selective catalytic reduction of nitrogen oxides.

8. Apparatus according to Claim 1, **characterized in that** the catalytically activated particle filter further contains at least one catalytically active coating which promotes the oxidation of carbon monoxide and hydrocarbons to carbon dioxide and the oxidation of nitrogen monoxide to nitrogen dioxide.

9. Process for abatement of carbon monoxide, hydrocarbons, nitrogen oxides and soot particles in diesel engine exhaust gases comprising:
1. passing the diesel engine exhaust gas to be cleaned through a diesel oxidation catalyst, wherein carbon monoxide and hydrocarbons are at least in part oxidized to carbon dioxide and nitrogen monoxide is at least in part oxidized to nitrogen dioxide;
2. a first addition of ammonia (30) and/or a compound decomposable to ammonia to the exhaust gas to be cleaned on the outflow side relative to the diesel oxidation catalyst;
3. after the first addition of ammonia and/or a compound decomposable to ammonia, passing the exhaust gas to be cleaned through a catalytically activated particle filter (40), wherein the soot particles are deposited in the particle filter and at least in part oxidized to carbon monoxide and/or carbon dioxide with the nitrogen dioxide present in the exhaust gas and wherein the nitrogen oxides present in the exhaust gas to be cleaned and/or formed as a byproduct in the soot oxidation are at least in part reduced to nitrogen with ammonia;
4. a second addition of ammonia (30') and/or a compound decomposable to ammonia to the exhaust gas to be cleaned on the outflow side relative to the particle filter; and
5. after the second addition of ammonia and/or a compound decomposable to ammonia, passing the exhaust gas to be cleaned through a catalyst (50) for selective catalytic reduction of nitrogen oxides, wherein nitrogen monoxide and nitrogen dioxide are at least in part reduced to nitrogen with ammonia,
**characterized in that** a first sensor for determining the nitrogen oxide content in the exhaust gas to be cleaned is arranged upstream or downstream of the diesel oxidation catalyst (20) in the flow direction of the exhaust gas while a second sensor for determining the nitrogen oxide content in the exhaust gas to be cleaned is arranged between the catalytically activated particle filter (40) and the second apparatus for addition of ammonia (30') and/or a compound decomposable to ammonia to the exhaust gas to be cleaned.

10. Process according to claim 9, **characterized in that** the first addition of ammonia and/or a compound decomposable to ammonia to the exhaust gas to be cleaned is carried out such that the amount of ammonia added/formed from the compound is greater than the amount of ammonia required for reduction of the nitrogen oxides present in the exhaust gas to be cleaned to nitrogen according to the corresponding reaction stoichiometry.

11. Process according to Claim 9, **characterized in that** the first addition of ammonia and/or a compound decomposable to ammonia to the exhaust gas to be cleaned is carried out such that the amount of ammonia added/formed from the compound is less than the amount of ammonia required for reduction of the nitrogen oxides present in the exhaust gas to be cleaned to nitrogen according to the corresponding reaction stoichiometry.

## Revendications

1. Dispositif de réduction de monoxyde de carbone, d'hydrocarbures, d'oxydes d'azote et de particules de suie dans les gaz d'échappement de moteur diesel, ledit dispositif comprenant un conduit de gaz d'échappement (10) et comme partie de celui-ci en combinaison et dans cet ordre dans le sens d'écoulement des gaz d'échappement
1. un catalyseur d'oxydation diesel (20) destiné à l'oxydation du monoxyde de carbone, des hydrocarbures et du monoxyde d'azote ;
2. un premier dispositif d'ajout d'ammoniac (30) et/ou d'un composé décomposable en ammoniac dans les gaz d'échappement à purifier ;
3. un filtre à particules (40) catalytiquement actif contenant un substrat filtrant à flux de paroi qui comprend un matériau catalytiquement actif qui favorise la réduction catalytique sélective des oxydes d'azote en azote ;
4. un deuxième dispositif d'ajout d'ammoniac (30') et/ou d'un composé décomposable en ammoniac dans les gaz d'échappement à purifier ; ainsi que
5. un catalyseur (50) destiné à la réduction catalytique sélective des oxydes d'azote en azote, **caractérisé en ce qu'**un premier capteur destiné à déterminer la teneur en oxydes d'azote dans les gaz d'échappement à purifier est disposé en amont ou en aval du catalyseur d'oxydation diesel (20) dans le sens d'écoulement des gaz d'échappement, tandis qu'un deuxième capteur destiné à déterminer la teneur en oxydes d'azote dans les gaz d'échappement à purifier est disposé entre le filtre à particules (40) catalytiquement actif et le deuxième dispositif destiné à ajouter de l'ammoniac (30') et/ou un composé décomposable en ammoniac dans les gaz d'échappement à purifier.

2. Dispositif selon la revendication 1, **caractérisé en ce que** la matière catalytiquement active contenue dans le filtre à particules (40) catalytiquement actif est un revêtement catalytiquement actif qui favorise la réduction catalytique sélective des oxydes d'azote en azote.

3. Dispositif selon la revendication 2, **caractérisé en ce que** le substrat filtrant à flux de paroi (1) comporte du côté sortie d'écoulement des canaux d'entrée d'écoulement (4) fermés de manière étanche aux gaz et du côté entrée d'écoulement des canaux de sortie d'écoulement fermés de manière étanche aux gaz, ainsi qu'une paroi poreuse qui sépare spatialement les canaux d'entrée d'écoulement et de sortie d'écoulement les uns des autres, est perméable aux gaz d'échappement à purifier et qui comprend le revêtement catalytiquement actif destiné à la réduction catalytique sélective des oxydes d'azote en azote.

4. Dispositif selon la revendication 2, **caractérisé en ce que** le substrat filtrant à flux de paroi (1) comporte du côté sortie d'écoulement des canaux d'entrée d'écoulement fermés de manière étanche aux gaz et du côté entrée d'écoulement des canaux de sortie d'écoulement fermés de manière étanche aux gaz, ainsi qu'une paroi poreuse qui sépare spatialement les canaux d'entrée d'écoulement et de sortie d'écoulement les uns des autres et qui est perméable aux gaz d'échappement à purifier, et le revêtement catalytiquement actif destiné à la réduction catalytique sélective des oxydes d'azote en azote dans les canaux d'écoulement étant appliqué sur la paroi poreuse.

5. Dispositif selon la revendication 1, **caractérisé en ce qu'**un troisième capteur destiné à déterminer la teneur en oxydes d'azote dans les gaz d'échappement est disposé en aval du catalyseur SCR (50) dans le sens d'écoulement des gaz d'échappement.

6. Dispositif selon l'une des revendications 1 ou 5, **caractérisé en ce qu'**un catalyseur d'oxydation, qui favorise l'oxydation de l'ammoniac, est disposé en aval du filtre à particules (40) catalytiquement actif et en amont du deuxième capteur de détermination de la teneur en oxydes d'azote dans les gaz d'échappement à purifier.

7. Dispositif selon l'une des revendications précédentes, **caractérisé en ce qu'**un catalyseur d'oxydation de l'ammoniac est disposé en aval du catalyseur de réduction catalytique sélective des oxydes d'azote.

8. Dispositif selon la revendication 1, **caractérisé en ce que** le filtre à particules catalytiquement actif contient en outre au moins un revêtement catalytiquement actif qui favorise l'oxydation du monoxyde de carbone et des hydrocarbures en dioxyde de carbone et l'oxydation du monoxyde d'azote en dioxyde d'azote.

9. Procédé de réduction du monoxyde de carbone, des hydrocarbures, des oxydes d'azote et des particules de suie dans les gaz d'échappement des moteurs diesel, ledit procédé comprenant les étapes suivantes :
1. faire passer les gaz d'échappement de moteur diesel à purifier à travers un catalyseur d'oxydation diesel, le monoxyde de carbone et les hydrocarbures étant au moins partiellement oxydés en dioxyde de carbone et le monoxyde d'azote étant au moins partiellement oxydé en dioxyde d'azote ;
2. un premier ajout d'ammoniac (30) et/ou d'un composé décomposable en ammoniac aux gaz d'échappement à purifier en aval du catalyseur d'oxydation diesel ;
3. faire passer les gaz d'échappement à purifier après le premier ajout d'ammoniac et/ou d'un composé décomposable en ammoniac à travers un filtre à particules (40) catalytiquement actif,
les particules de suie étant déposées dans le filtre à particules et au moins partiellement oxydées par le dioxyde d'azote contenu dans les gaz d'échappement en monoxyde de carbone et/ou en dioxyde de carbone et
les oxydes d'azote contenus dans les gaz d'échappement à purifier et/ou formés en tant que sous-produit lors de l'oxydation des suies étant au moins partiellement réduits avec de l'ammoniac en azote ;
4. un deuxième ajout d'ammoniac (30') et/ou d'un composé décomposable en ammoniac aux gaz d'échappement à purifier en aval du filtre à particules ; ainsi que
5. faire passer les gaz d'échappement à purifier après le deuxième ajout d'ammoniac et/ou d'un composé décomposable en ammoniac à travers un catalyseur (50) pour la réduction catalytique sélective des oxydes d'azote, le monoxyde d'azote et le dioxyde d'azote étant au moins partiellement réduits en azote avec de l'ammoniac, **caractérisé en ce qu'**un premier capteur destiné à déterminer la teneur en oxyde d'azote dans les gaz d'échappement à purifier est disposé en amont ou en aval du catalyseur d'oxydation diesel (20) dans le sens d'écoulement des gaz d'échappement, tandis qu'un deuxième capteur de détermination de la teneur en oxydes d'azote dans les gaz d'échappement à purifier est disposé entre le filtre à particules (40) catalytiquement actif et le deuxième dispositif d'ajout d'ammoniac (30') et/ou un composé décomposable en ammoniac dans les gaz d'échappement à purifier.

10. Procédé selon la revendication 9, **caractérisé en ce que** le premier ajout d'ammoniac et/ou d'un composé décomposable en ammoniac aux gaz d'échappement à purifier est effectué de telle sorte que la quantité d'ammoniac ajoutée ou provenant du composé soit supérieure à la quantité d'ammoniac requise pour réduire les oxydes d'azote contenus dans les gaz d'échappement à purifier en azote selon la stœchiométrie de réaction correspondante.

11. Procédé selon la revendication 9, **caractérisé en ce que** le premier ajout d'ammoniac et/ou d'un composé décomposable en ammoniac aux gaz d'échappement à purifier est effectué de telle sorte que la quantité d'ammoniac ajoutée ou provenant du composé soit inférieure à la quantité d'ammoniac requise pour réduire les oxydes d'azote contenus dans les gaz d'échappement à purifier en azote selon la stœchiométrie de réaction correspondante.
